# DEMANDE DE BREVET EUROPEEN

(11) **EP 0 711 050 A1**
(43) Date de publication de la demande: **08.05.1996**
(21) Numéro de dépôt: 95402448.5
(22) Date de dépôt: 03.11.1995
(51) Int. Cl.: H04L 9/06, E05B 49/00

(54) **Système de télécommande mettant en oeuvre un cryptage, notamment pour véhicule automobile**

(30) Priorité: 04.11.1994 FR 19940013203
(71) Demandeur: VALEO ELECTRONIQUE, F-94042 Creteil Cédex (FR)
(72) Inventeur: Tran, Laurent, F-94130 Saint-Mande (FR)
(74) Mandataire: Le Forestier, Eric, et al

(57) **Abrégé**

Système de télécommande comportant un émetteur et un récepteur pour l'émission et la réception d'un signal porteur d'informations binaires de commande, l'émetteur comportant des moyens pour la génération d'un signal de commande constituant au moins un bloc de signaux binaires faiblement évolutif d'un message à l'autre et d'au moins un bloc de signaux binaires évolutif, ainsi que des moyens pour le cryptage de ce message de commande, le réception comportant des moyens de décryptage, **caractérisé en ce que** les moyens de cryptage de l'émetteur comportent des moyens pour combiner le bloc évolutif, le bloc non évolutif et au moins une clé de cryptage, dans des opérations à base de OU EXCLUSIF, ainsi que des moyens pour réaliser une permutation sur le résultat de ces opérations.

## Description

La présente invention est relative aux systèmes de télécommande mettant en oeuvre un cryptage.

Elle trouve plus particulièrement avantageusement application dans le domaine des véhicules automobiles, par exemple pour la commande à distance des ouvrants d'un véhicule ou encore pour la commande du calculateur d'injection d'un moteur par la centrale d'antivol du véhicule correspondant.

La cryptographie traditionnelle mettait en oeuvre des algorithmes de chiffrement utilisant trois classes principales de cryptage, à savoir :
- les cryptages par substitution,
- les cryptages à fonction à sens unique,
- les cryptages par transposition.

Les cryptages par substitution consistent à remplacer dans un texte en clair chaque caractère par un autre pris dans un alphabet de substitution. Ces cryptages présentent l'inconvénient d'être facilement cassables par analyse des fréquences de répétition des différents caractères des messages cryptés.

Dans les cryptages par fonction à sens unique, on remplace un nombre (ou caractère) par une fonction de celui-ci qui est difficile à inverser (fonction puissance dans un anneau d'entiers modulo n, fonction exponentielle dans un corps fini, par exemple). Ce type de cryptage nécessite des puissances de calcul importantes pour réaliser les opérations de chiffrement/déchiffrement.

Les méthodes de cryptage par transposition consistent à changer l'ordre des caractères d'un message en clair en fonction d'une clé donnée.

Il a déjà été proposé des systèmes de télécommande mettant en oeuvre de tels cryptages. On pourra à cet égard avantageusement se référer à la demande de brevet EP-547 725. Ces cryptages sont aisément forçables au moyen de traitements informatiques.

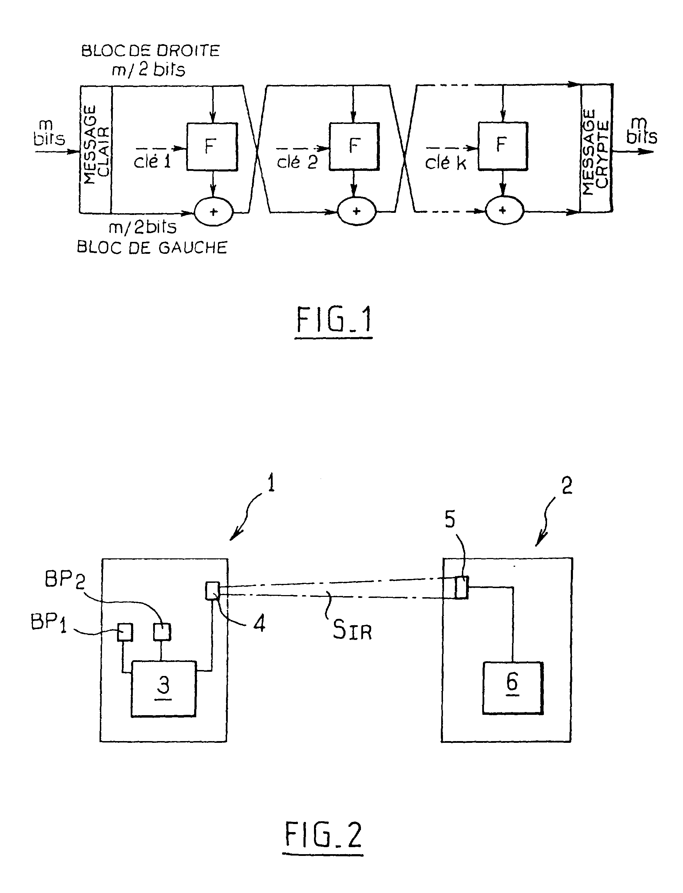

Un algorithme moderne couramment employé pour réaliser des échanges d'informations cryptées est l'algorithme connu sous le nom de D.E.S. (Data Encryption Standard) proposé par la Société IBM aux alentours de 1977. Cet algorithme met en oeuvre une itération de k étapes paramétrées telles qu'illustrées sur la figure 1. A chaque étape, le message de n bits est scindé en un bloc de gauche et un bloc de droite, chacun de n/2 bits. Le bloc de droite en entrée est recopié à la place du bloc de gauche en sortie. Le bloc de droite en sortie est le résultat d'une opération de OU EXCLUSIF entre le bloc de gauche en entrée et une fonction F calculée à partir du bloc de droite en entrée et de la clé correspondant à cette étape.

Le D.E.S. est un algorithme de cryptage particulièrement adapté au traitement de messages aléatoires : lorsque les messages transmis consistent en une suite de caractères équiprobables, la méthode D.E.S. est très résistante.

Par contre, le cryptage DES s'avère aisément forçable lorsque les messages transmis varient faiblement, ce qui est le cas notamment des messages de télécommande.

Un message de télécommande se décompose en effet généralement :
- en une partie non évolutive qui porte le code fonction (ouverture ou verrouillage de la porte, par exemple), ainsi que le code de base pour l'identification du récepteur,
- en une partie faiblement variable constituée par un code fenêtre qui est incrémenté à chaque utilisation, de façon qu'un message déjà transmis ne puisse être réutilisé.

Avec des messages de ce type, une méthode de forçage consiste à enregistrer des messages consécutifs et à mettre en oeuvre des décryptages avec toutes les combinaisons possibles de clés jusqu'à retrouver deux messages en clair présentant une différence de code correspondant à une incrémentation du code fenêtre. Le temps nécessaire pour forcer un cryptage D. E.S. avec cette méthode est réduit.

Un but de l'invention est de proposer un système de télécommande qui met en oeuvre un cryptage qui ne peut être forcé qu'avec des moyens informatiques importants et des temps de calculs très longs (plusieurs années en théorie).

A cet effet, l'invention propose un système de télécommande comportant un émetteur et un récepteur pour l'émission et la réception d'un signal porteur d'informations binaires de commande, l'émetteur comportant des moyens pour la génération d'un message de commande constitué d'au moins un bloc de signaux binaires non évolutif et d'au moins un bloc de signaux binaires évolutif, ainsi que des moyens pour le cryptage de ce message de commande, le récepteur comportant des moyens de décryptage, caractérisé en ce que les moyens de cryptage de l'émetteur comportent des moyens pour combiner le bloc évolutif, le bloc non évolutif et au moins une clé de cryptage, dans des opérations à base de OU EXCLUSIF.

Par bloc non évolutif, on entend un bloc qui n'est pas modifié d'une émission à l'autre, ou qui ne peut prendre qu'un nombre très restreint de valeurs différentes.

Conformément à un autre aspect important de l'invention, les moyens de cryptage comportent également des moyens pour réaliser une permutation sur les signaux binaires du message ainsi obtenu, le message crypté étant le résultat de plusieurs itérations des traitements réalisés par les moyens de combinaison et les moyens de permutation.

D'autres caractéristiques et avantages de l'invention ressortiront encore de la description qui suit. Cette description est purement illustrative et non limitative.

Elle doit être lue en regard des dessins annexés sur lesquels :
- la figure 1, qui a déjà été commentée, illustre l'algorithme D.E.S. ;
- la figure 2 illustre schématiquement un émetteur et un récepteur d'un système conforme à l'invention ;
- les figures 3a à 3c représentent trois formats de signaux élémentaires émis ;
- les figures 4a), 4b)i) et 4b)ii) illustrent la structure d'un télégramme de commande émis ;
- la figure 5 illustre l'algorithme pour la génération du bloc de brouillage du message crypté ;
- les figures 6a et 6b illustrent l'algorithme de cryptage mis en oeuvre dans l'émetteur ;
- les figures 7a et 7b illustrent l'algorithme de décryptage mis en oeuvre dans le récepteur ;
- la figure 8 représente le schéma d'un mode de réalisation possible pour l'émetteur de l'invention.

Le système de télécommande de verrouillage de portes de véhicules automobiles représenté sur la figure 2 met en oeuvre une transmission infrarouge. Il comporte un émetteur de télécommande 1 et un récepteur 2.

L'émetteur 1 de télécommande comporte dans un boîtier portatif un microprocesseur 3 relié en sortie à une ou plusieurs diodes 4 d'émission d'un signal infrarouge S_{IR} et relié en entrée à des boutons poussoirs BP1 et BP2 destinés à être actionnés par un opérateur.

Le récepteur 2 est intégré à l'habitacle d'un véhicule. Il comporte en particulier une photodiode 5 de réception et un microprocesseur 6 pour le traitement du signal S_{IR} reçu. Ce microprocesseur 6 émet en sortie des signaux analogiques qui commandent les moyens de verrouillage des portes du véhicule.

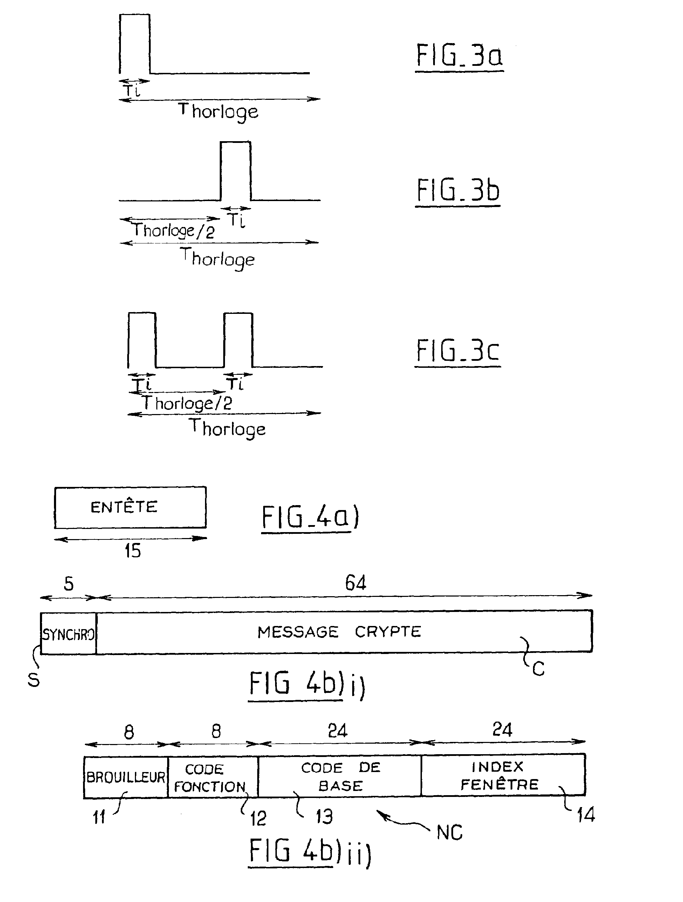

Le signal infrarouge S_{IR} émis est une succession de signaux élémentaires impulsionnels du type de ceux représentés sur les figures 3a à 3c.

Les signaux représentés sur les figures 3a et 3b sont des signaux élémentaires binaires correspondant respectivement, par exemple, à la valeur 0 et à la valeur 1. Le signal représenté sur la figure 3c est un signal élémentaire de synchronisation.

Ces différents signaux élémentaires ont une période T_{horloge} de 1 ms.

Le signal élémentaire correspondant à la valeur binaire 0 consiste en une impulsion de durée Ti égale à 40 µs en début d'une période T_{horloge} (figure 3a). Le signal élémentaire correspondant à la valeur binaire 1 consiste en une impulsion de durée Ti au milieu d'une période T_{horloge} (figure 3b).

Le signal de synchronisation consiste, dans une même période T_{horloge}, en deux impulsions de durée Ti, l'une en début de la période, l'autre au milieu.

Un télégramme de commande émis par le système conforme à l'invention consiste en un message de 69 bits (figure 4b i)) précédé par une entête de 15 bits (figure 4a).

Les 15 bits de l'entête sont identiques et correspondent à la valeur binaire 0. Cette entête a pour fonction d'activer le microprocesseur 6 du récepteur 2. Une fois le microprocesseur 6 activé, le récepteur utilise également les derniers bits de l'entête pour récupérer la période du signal reçu.

Le message de 69 bits comporte, ainsi qu'illustré sur la figure 4b i), une partie S de synchronisation (5 bits), ainsi qu'une partie C qui est cryptée (64 bits).

Les cinq bits de la partie S de synchronisation sont codés selon le format de la figure 3c. Cette synchronisation indique le début du message.

Le message crypté C est obtenu après traitement du message non crypté NC tel que représenté sur la figure 4b ii). Le message NC non crypté consiste en la succession :
- d'un bloc 11 de 8 bits de brouillage,
- d'un bloc 12 de 8 bits de code fonction,
- d'un bloc 13 de 24 bits de code de base pour l'identification du récepteur,
- d'un bloc 14 de 24 bits qui constitue une fenêtre d'incrémentation (index fenêtre).

Le bloc de brouillage 11 est un bloc aléatoire rajouté au message pour le rendre difficile à forcer.

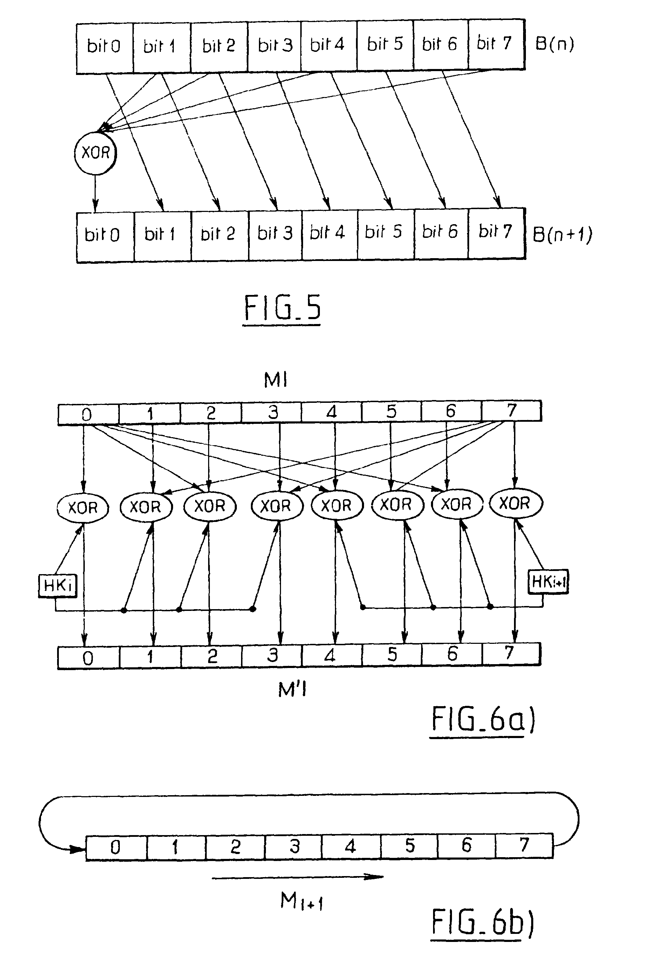

Le microprocesseur 3 comporte des moyens pour générer ce bloc de brouillage 11 en mettant en oeuvre un algorithme pseudo-aléatoire, qui est par exemple du type de celui illustré sur la figure 5. Avec cet algorithme, la génération du bloc B(n+1) à partir du bloc B(n) se fait de la façon suivante :
- le bit 0 du bloc B(n+1) est le résultat d'un calcul à base de plusieurs opérations de OU EXCLUSIF (XOR) sur les bits 1, 2, 4 et 7 du bloc B(n) ;
- les bits 1 à 7 du bloc B(n+1) correspondent respectivement aux bits 0 à 6 du bloc B(n). Le microprocesseur 3 utilise à cet effet un registre à décalage classique en entrée duquel le bit 0 aléatoire généré est introduit.

La valeur d'initialisation B(0) du bloc de brouillage il peut être choisie de façon aléatoire, mais doit être non nulle. Elle est par exemple égale au deuxième octet du code de base 13 et est mémorisée en usine du microprocesseur 3 dans une mémoire morte de type EEPROM.

Comme on l'aura compris, la valeur B(n) du bloc de brouillage 11 se modifie à chaque fois que l'un des boutons poussoirs de la télécommande est sollicité : la valeur B(n+1) remplace alors la valeur B(n) dans la mémoire morte EEPROM.

Le bloc 12 de code fonction comporte 4 bits pour l'identification de l'émetteur 1 et 4 bits pour l'indication de la fonction à accomplir (verrouillage des portes, super-condamnation, ....).

Le numéro de l'émetteur 1 correspondant aux quatre bits d'identification est programmé en usine et stocké dans une mémoire morte de type EEPROM du microprocesseur 3.

Les quatre bits d'indication de fonction sont générés dans le microprocesseur 3 en réponse à l'action d'un opérateur sur les boutons poussoirs BP1, BP2. Les valeurs logiques ainsi générées sont stockées dans des mémoires vives de type RAM du microprocesseur 3.

Le bloc 13 code de base 3 sert à identifier le récepteur 2, c'est-à-dire le véhicule dans lequel ce récepteur 2 est intégré. Ce code de base 13 est identique pour les différentes télécommandes vendues pour un même véhicule. Sa valeur est calculée de façon pseudo-aléatoire et mémorisée, en usine, dans des mémoires mortes de type EEPROM des microprocesseurs 3 et 6.

Le bloc index fenêtre 14 est un bloc incrémenté de 1 à chaque sollicitation des touches (boutons BP1, BP2) de l'émetteur de télécommande 1. Sa valeur initiale est calculée de façon pseudo-aléatoire et est stockée en usine dans des mémoires mortes de type EEPROM des microprocesseurs 3 et 6. Le bloc index fenêtre est donc différent pour chaque émetteur 1. La fonction de ce bloc index fenêtre 14 est, d'une part, de permettre d'identifier l'émetteur 1 en évitant qu'un message déjà émis ne puisse être réutilisé, et, d'autre part, de contribuer, ainsi que cela ressortira de la suite du présent texte, au caractère évolutif du signal transmis.

L'algorithme de cryptage mis en oeuvre par le microprocesseur 3 pour crypter le message NC va maintenant être décrit en référence aux figures 6a et 6b.

Les traitements illustrés sur les figures 6a et 6b correspondent à deux étapes successives itérées quatre fois.

Les blocs de bits traités dans ces différentes étapes sont des blocs de huit octets numérotés de 0 à 7 sur ces figures.

Dans le traitement illustré sur la figure 6a, un bloc Mi est transformé lors de la (i+1)ème itération en un bloc M'i de la façon suivante.

Les octets 0 à 3 sont chacun traités par une opération de OU EXCLUSIF (XOR) avec une clé HKᵢ codée sur 1 octet.

Les octets 4 à 7 sont chacun traités par une opération de OU EXCLUSIF (XOR) avec une autre clé HKᵢ₊₁ également codée sur 1 octet.

Les octets 0 et 7 intermédiaires ainsi obtenus sont les octets 0 et 7 du bloc M'i.

Les octets 1, 3 et 5 du bloc M'i sont le résultat d'une opération de OU EXCLUSIF entre l'octet 7 du bloc Mi et respectivement les octets 1, 3 et 5 intermédiaires.

Les octets 2, 4 et 6 du bloc M'i sont le résultat d'une opération de OU EXCLUSIF entre l'octet 0 du bloc Mi et respectivement les octets 2, 4 et 6 intermédiaires.

Comme on l'aura compris, les clés de cryptage HKi sont au nombre de huit. Elles sont mémorisées en usine dans une mémoire morte du microprocesseur 3.

Pour la première itération, le bloc Mi est le message NC non crypté. Pour les autres, le bloc Mi est le résultat de l'itération précédente à l'issue de l'étape illustrée sur la figure 6b.

Cette étape consiste en une permutation, qui est une rotation bouclée à droite sur n bits, effectuée à partir du bloc M'i résultat du traitement de la figure 6a. Le nombre n est le nombre de bits de valeurs 1 dans le bloc M'i.

Comme on l'aura compris, la première étape de chaque itération (traitement à base d'opérations OU EXCLUSIF illustré sur la figure 6a)) permet d'intégrer les clés de cryptage dans le message et de combiner les octets 0 et 7 (brouilleur et index fenêtre), qui sont les octets évolutifs du message, avec les autres octets (octets non évolutifs), de façon que le message C crypté varie fortement d'un signal de l'émetteur 1 à l'autre.

L'étape de permutation illustrée sur la figure 6b) a pour but d'introduire une fonction non linéaire sur l'ensemble du message. Elle permet de relier entre eux les octets du message pour opérer un bouleversement global sur celui-ci.

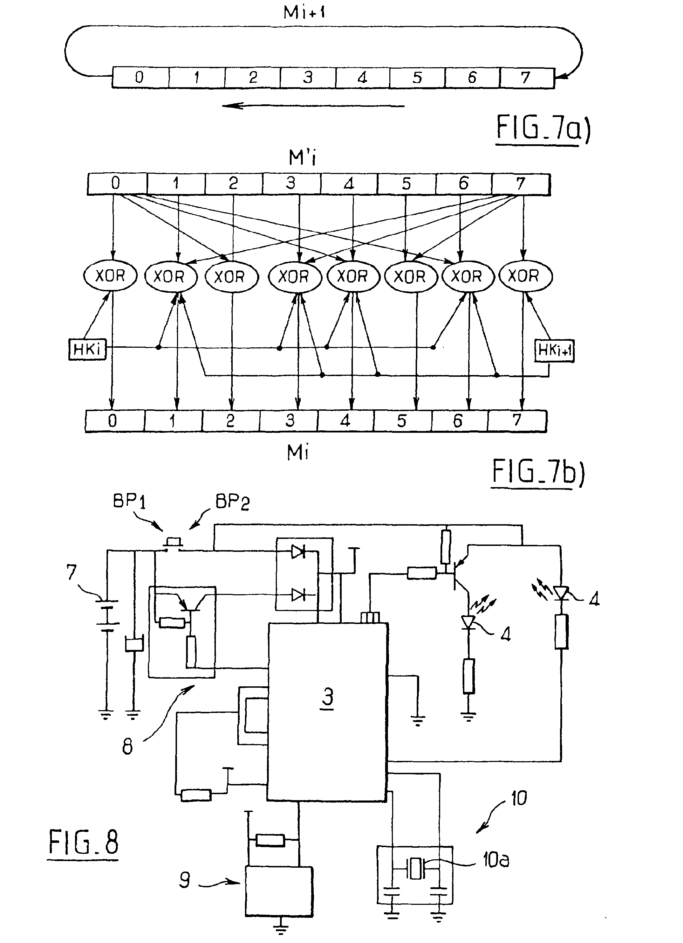

Le traitement de décryptage que réalise le microprocesseur 6 du récepteur 2 va maintenant être décrit en référence aux figures 7a et 7b, qui illustrent les deux étapes successives itérées quatre fois de ce traitement.

Le traitement 7a est une rotation bouclée à gauche effectuée à partir du bloc Mᵢ₊₁, sur le nombre n de bits de valeurs 1 de ce bloc, pour retrouver le bloc M'ᵢ.

Ce bloc M'ᵢ est ensuite traité, dans l'étape illustrée sur la figure 7b, de façon à retrouver le bloc Mᵢ.

Les octets 0 et 7 du bloc Mᵢ sont les résultats d'opérations de OU EXCLUSIF entre les octets 0 et 7 du bloc M'ᵢ et respectivement les clés de cryptage HKᵢ et HKᵢ₊₁.

Les octets 1 et 3 du bloc Mᵢ sont le résultat de plusieurs opérations de OU EXCLUSIF entre les octets 1 et 3 correspondants du bloc M'ᵢ, l'octet 7 de ce bloc M'ᵢ et les clés de cryptage HKᵢ et 'HKᵢ₊₁.

Les octets 4 et 6 du bloc Mᵢ sont le résultat de plusieurs opérations de OU EXCLUSIF entre les octets 4 et 6 du bloc M'ᵢ, l'octet 0 de ce bloc M'ᵢ et les clés de cryptage HKI et HKI+1.

L'octet 2 du bloc M'ᵢ est le résultat d'une opération de OU EXCLUSIF entre les octets 0 et 2 du bloc M'ᵢ.

L'octet 5 du bloc Mᵢ est le résultat d'une opération de OU EXCLUSIF entre les octets 5 et 7 du bloc M'ᵢ.

Comme on l'aura compris, les clés HKᵢ et KHᵢ₊₁ mises en oeuvre par cet algorithme de décryptage sont celles de l'algorithme de cryptage. Elles sont mémorisées dans une mémoire morte du microprocesseur 6 en usine.

On a représenté sur la figure 8 un schéma d'un mode de réalisation possible pour l'émetteur infrarouge conforme à l'invention. Le microprocesseur 3 est du type NTA85X1X.

L'émetteur représenté sur cette figure 8 comprend en outre une source d'alimentation en tension 7 reliée au microprocesseur 3 par un circuit d'alimentation 8, ainsi que par l'intermédiaire des différents boutons poussoirs BP1 et BP2 du boîtier. Le microprocesseur 3 est également relié à une unité de vérification d'alimentation 9 de type MC33164, ainsi qu'à un circuit oscillateur 10, dont le cristal a été référencé par 10a.

Le microprocesseur 3 met en oeuvre les algorithmes précédemment décrits en référence aux figures 5 à 7 et commande deux diodes 4 d'émission infrarouge pour l'émission d'un signal dont le format est celui décrit en référence aux figures 3 et 4.

D'autres modes de réalisation de l'invention sont bien entendu possibles. En particulier, l'invention s'applique à tout autre type de transmission que les transmissions par infrarouge.

Elle trouve notamment avantageusement application dans le cas de transmissions radiofréquences. Dans ce cas en effet, les signaux sont émis de façon omnidirectionnelle, de sorte que toute personne se trouvant dans le voisinage d'un émetteur activé reçoit le signal émis et peut l'enregistrer. Il est par conséquent important que le cryptage ne puisse être forcé aisément.

De façon générale, le terme "télécommande" doit être compris comme désignant tout type de transmission d'instructions entre un émetteur et un récepteur distants, y compris les transmissions filaires.

## Revendications

1. Système de télécommande comportant un émetteur (1) et un récepteur (2) pour l'émission et la réception d'un signal (S_{IR}) porteur d'informations binaires de commande, l'émetteur (1) comportant des moyens (3) pour la génération d'un message de commande (C) constitué d'au moins un bloc (12, 13) de signaux binaires non évolutif et d'au moins un bloc (11, 14) de signaux binaires évolutif, ainsi que des moyens (3) pour le cryptage de ce message de commande (C), le récepteur (2) comportant des moyens de décryptage (6), **caractérisé en ce que** les moyens de cryptage (3) comportent des moyens pour combiner le bloc non évolutif (12, 13), le bloc évolutif (11, 14) et au moins une clé de cryptage (HKi), dans des opérations à base de OU EXCLUSIF (XOR).

2. Système selon la revendication 1, **caractérisé en ce que** que les moyens de cryptage (3) comportent également des moyens pour réaliser une permutation sur les signaux binaires du message (M'i) ainsi obtenu, le message crypté (C) étant le résultat de plusieurs itérations des traitements réalisés par les moyens de combinaison et les moyens de permutation.

3. Système selon l'une des revendications précédentes, **caractérisé en ce que** les moyens de combinaison remplacent dans un message :
- un bloc en entrée situé dans ce message à la place d'un bloc évolutif (octets 0 et 7) par le résultat d'une opération de OU EXCLUSIF entre ce bloc en entrée et une clé de cryptage (HKi, HKi+1),
- un bloc en entrée situé dans ce message à la place d'un bloc non évolutif (octets 1 à 6) par le résultat d'une opération de OU EXCLUSIF entre
. d'une part, le résultat d'une opération de OU EXCLUSIF entre ce bloc en entrée et une clé de cryptage (HKi, HKi+1), et
. d'autre part, un bloc en entrée situé dans le message à la place d'un bloc évolutif (octets 0 et 7).

4. Système selon la revendication 3, **caractérisé en ce qu'**un message non crypté comprend huit octets (octets 0 à 7), dont deux sont des octets évolutifs (octets 0 et 7), les six autres étant des octets non évolutifs (octets 1 à 6), les moyens de combinaison remplaçant dans un message :
- l'octet situé à la place d'un premier octet évolutif (octet 0) par le résultat d'une opération de OU EXCLUSIF entre cet octet en entrée et une première clé de cryptage (HKi),
- l'octet situé à la place de l'autre octet évolutif (octet 7) par le résultat d'une opération de OU EXCLUSIF entre cet octet en entrée et une deuxième clé de cryptage (HKi+1),
- trois des octets en entrée situés à la place d'octets non évolutifs (octets 1 à 3) par le résultat d'une opération de OU EXCLUSIF entre
. d'une part, le résultat d'une opération de OU EXCLUSIF entre ces octets en entrée et la première clé de cryptage (HKi), et
. d'autre part,
i) l'octet en entrée situé dans le message à la place du deuxième octet évolutif (octet 7), pour deux (octets 1 et 3) de ces trois octets, et
ii) l'octet en entrée situé dans le message à la place du premier octet évolutif (octet 0), pour l'autre (octet 2),
- trois des octets en entrée situés à la place des trois autres octets non évolutifs (octets 4 à 6) par le résultat d'une opération de OU EXCLUSIF entre
. d'une part, le résultat d'une opération de OU EXCLUSIF entre ces octets en entrée et la deuxième clé de cryptage (HKi+1), et
. d'autre part,
i) l'octet en entrée situé dans le message à la place du premier octet évolutif (octet 0), pour deux (octets 4 et 6) de ces trois octets, et
ii) l'octet en entrée situé dans le message à la place du deuxième octet évolutif (octet 7), pour l'autre (octet 5).

5. Système selon les revendications 2 et 4 en combinaison, **caractérisé en ce que** le message crypté (C) est le résultat de quatre itérations, les moyens de cryptage comportant des moyens de mémorisation dans lesquels sont stockées huit clés de cryptage (HKi, HKi+1).

6. Système selon l'une des revendications précédentes, **caractérisé en ce que** les moyens de permutation remplacent le message qu'ils reçoivent en entrée par le résultat d'une rotation de ce message sur lui-même par décalage dans un sens d'un nombre n de signaux binaires, où n est le nombre de signaux binaires du message prenant une valeur prédéterminée.

7. Système selon l'une des revendications précédentes, **caractérisé en ce que** l'émetteur (1) comporte des moyens pour la génération d'un bloc évolutif aléatoire de brouillage (11).

8. Système selon la revendication 7, **caractérisé en ce que** les moyens de génération du bloc de brouillage comportent un registre à décalage, ainsi que des moyens pour générer en entrée du registre à décalage un signal binaire élémentaire aléatoire à chaque nouvelle émission de l'émetteur.

9. Système de télécommande selon l'une des revendications précédentes, **caractérisé en ce que** le signal transmis entre l'émetteur (1) et le récepteur (2) est un signal radiofréquences.

10. Système de télécommande pour véhicule automobile, en particulier pour la commande à distance d'ouvrants, selon l'une des revendications précédentes.

11. Emetteur ou récepteur pour un système de télécommande selon l'une des revendications précédentes.
